# EUROPÄISCHE PATENTSCHRIFT

(11) **EP 1 784 318 B1**
(45) Veröffentlichungstag und Bekanntmachung des Hinweises auf die Patenterteilung: **19.08.2009**
(21) Anmeldenummer: 05752800.2
(22) Anmeldetag: 08.06.2005
(51) Int. Cl.: B60R 19/48

(54) **EINBAUVORRICHTUNG FÜR EINEN SENSOR**
DEVICE FOR INSTALLING A SENSOR
DISPOSITIF DE MONTAGE DE CAPTEUR

(30) Priorität: 31.07.2004 DE 102004037257
(43) Veröffentlichungstag der Anmeldung: 16.05.2007
(73) Patentinhaber: ROBERT BOSCH GMBH, 70442 Stuttgart (DE)
(72) Erfinder: FAASS, Manfred, 76327 Pfinztal (DE); JORDANEK, Olaf, 71299 Wimsheim (DE); TALMON L'ARMEE, Rebecca, 75382 Althengstett-Neuhengstett (DE)
(86) Internationale Anmeldenummer: PCT/EP2005/052634
(87) Internationale Veröffentlichungsnummer: WO 2006/013127

(56) Entgegenhaltungen:
- DE-A1- 19 613 803
- DE-A1- 19 939 747
- US-A1- 2004 061 599
- PATENT ABSTRACTS OF JAPAN Bd. 2002, Nr. 11, 6. November 2002 (2002-11-06) & JP 2002 195225 A (NILES PARTS CO LTD), 10. Juli 2002 (2002-07-10)

## Beschreibung

### STAND DER TECHNIK

Die vorliegende Erfindung betrifft ein Einbauvorrichtung für einen Sensor an einer Außenfläche eines Bauteils eines Kraftfahrzeugs.

An einer Außenfläche eines Bauteils eines Kraftfahrzeugs, beispielsweise an einem Stoßfänger, werden üblicherweise Abstandssensoren, beispielsweise für Entfernungsmessungen zum Vordermann oder Parkvorgänge, mit unterschiedlichen Einbauvorrichtungen angebracht. Hierzu sind üblicherweise drei Komponenten erforderlich: ein Einbaugehäuse für den Sensor, ein Konturring, und ein Federelement. Das Einbaugehäuse bildet die Halterung für den Sensor. Die Winkellage des Sensors im Bauteil bzw. Stoßfänger des Kraftfahrzeugs wird durch den Konturring ermöglicht, wobei dieser auch die Anpassung an die Kontur des Stoßfängers bildet. Durch unterschiedliche Stoßfängerkonturen werden somit viele verschiedene Konturringe benötigt. Die Feder bildet die Festlegung der Einbauvorrichtung im Stoßfänger. Somit wird eine große Anzahl von Teilen für viele Einsatzbereiche erforderlich.

Eine Befestigung nach dem Stand der Technik beschreibt DE 196 21 964 A1 als eine Vorrichtung zur ortsvariablen Befestigung eines Halters an einem Aufnahmeteil. Hierbei ist im Bauteil bzw. Aufnahmeteil des Kraftfahrzeugs eine bestimmte vorher festgelegte Kontur notwendig ist. In diese wird ein Halter mit korrespondierender Form eingesetzt und durch ein weiteres Bauteil, ein speziell gestaltetes Federelement fixiert.

DE 196 26 291 A1 beschreibt eine Befestigungshülse für Ultraschallwandler mit selbstsichernder Befestigung. Diese Hülse wird von außen durch das Aufnahmeteil bzw. den Stoßfänger des Kraftfahrzeugs in eine entsprechende Öffnung eingesetzt und verrastet mit Haltenasen an dieser. Durch Einbringen eines Sensors werden die Haltenasen zusätzlich nach außen gedrückt und gesichert. Für unterschiedliche Dicken der Aufnahmeteile sind unterschiedliche Befestigungshülse erforderlich.

Aus der DE 199 39 747 A1 ist eine Befestigungseinrichtung zur Befestigung von Ultraschallwandlern an Fahrzeugen, insbesondere an einem Stoßfänger, bekannt. Hierbei ist ein hülsenartiges Halteteil zur Aufnahme des Ultraschallwandlers vorgesehen, wobei das Halteteil an einem Ende einen flanschartigen Ansatz zur Auflage an dem Stoßfänger aufweist. Als separates Bauteil ist ein Haltering für den Ultraschallsensor vorgesehen, der an seiner der Halterung zugewandten Stirnseite drei Federelemente aufweist, die in Richtung der Halterung gerichtet sind und zur Anlage an dem Stoßfänger vorgesehen sind. Befestigungselemente an dem Halteteil werden von Ausformungen an dem Haltering aufgenommen.

### Vorteile der Erfindung

Die erfindungsgemäße Vorrichtung Einbauvorrichtung für einen Sensor mit dem Merkmal des unabhängigen Patentanspruchs hat den Vorteil, dass die Halterung des Sensors und die Fixierung bzw. Festlegung im Bauteil des Fahrzeugs von nur einem Bauteil übernommen wird.

Die Grundidee der Erfindung wird im Folgenden erläutert.

Die Erfindung beruht im Wesentlichen darauf, dass die Einbauvorrichtung einen Konturring und einen Grundkörper aufweist, wobei der Grundkörper aus zwei Bereichen besteht. Ein fester Bereich übernimmt die Aufnahme und Fixierung des Sensors im Grundkörper sowie die Befestigung an dem Konturring, der in das Bauteil des Fahrzeugs eingebracht ist, und ein zweiter flexibler bzw. elastischer Bereich fixiert die Einbauvorrichtung in dem Bauteil des Kraftfahrzeugs.

Die erfindungsgemäße Einbauvorrichtung für einen Sensor an einer Außenfläche eines Bauteils eines Kraftfahrzeugs weist Folgendes auf:
- einen Grundkörper zur Aufnahme des Sensors;
- Haltelaschen zur Festlegung des Sensors am Grundkörper;
- einen Konturring zur Aufnahme des Grundkörpers und zum Befestigen des Grundkörpers an dem Bauteil des Kraftfahrzeugs;
- Laschen zur Festlegung des Grundkörpers am Konturring; und
- Federelemente zum kraftschlüssigen Halten des Grundkörpers und Konturrings am Bauteil des Kraftfahrzeugs,
   und ist **dadurch gekennzeichnet, dass** der Grundkörper einen ersten, starren Bereich und einen zweiten, elastischen Bereich aufweist, und dass der Konturring an einer Öffnung
   des jeweiligen Bauteils vorgesehen ist. Aus dem Grundkörper mit zwei Bereichen ergibt sich eine vorteilhafte Reduzierung der Teilevielfalt und ein wirtschaftlicher Einbau. Der Konturring kann an jede Form des jeweiligen Bauteils angepasst sein, wobei der Grundkörper stets unverändert bleibt. Der Konturring kann sowohl Bestandteil des jeweiligen Bauteils sein, wodurch der Bereich von Bauteilen mit vorhandenem Konturring abgedeckt ist, als auch als ein eigenständiges Teil mit großem Anpassungsspektrum für unterschiedliche Bauteile ausgebildet sein. Hierzu sieht eine weitere bevorzugte Ausgestaltung vor, dass der Konturring von außen durch die Öffnung des jeweiligen Bauteils eingebracht ist.

Erfindungsgemäß ist ferner der erste, starre Bereich des Grundkörpers mit einer Sensoraufnahme und Haltelaschen zur Aufnahme des Sensors und zum Einbringen und Festlegen im Konturring mit den Laschen ausgebildet, wobei der zweite, elastische Bereich die Federelemente aufweist und mit dem ersten, starren Bereich über Verbindungsabschnitte einstückig verbunden ausgebildet ist. Diese Einstückigkeit des Grundkörpers ermöglicht somit vorteilhaft das Einsparen eines zusätzlichen Federelements sowie der Einbauarbeiten für dieses.

Es ist zweckmäßig, dass die Laschen federnd gegenüber dem Grundkörper ausgebildet sind, wobei für ihren Federweg zur Längsachse des Grundkörpers hin Ausnehmungen unter ihnen im Grundkörper eingebracht sind. Dadurch lassen sich im starren Bereich des Grundkörpers auch die starren Laschen in einem geeigneten Maß federnd gestalten, so dass zusätzliche elastische Elemente hierfür entfallen können.

Die Laschen weisen an ihren dem mit dem Verbindungsabschnitt verbundenen Ende gegenüberliegenden Ende Schrägen mit einem ersten Schrägenwinkel und zu den Verbindungsabschnitt weisenden Kanten mit jeweiligen Hinterschneidungen auf, wobei diese Kanten radial von der Längsachse des Grundkörpers weg weisen, wobei der Konturring an einem Ende einen Bund und zu den Endabschnitten der Laschen korrespondierende Öffnungen in seinem dem Bund gegenüberliegenden Abschnitt aufweist. Somit kann der Grundkörper mittels der Laschen, die in korrespondieren Öffnungen des Konturrings eingreifen, vorteilhaft einfach festgelegt werden. Die Öffnungen des Konturrings können an unterschiedlichen Positionen angeordnet sein, wodurch vorteilhaft verschiedene Lagen des Grundkörpers mit dem darin aufgenommenen Sensor bei gleichbleibendem Grundkörper aber unterschiedlichen Bauteilen eines Kraftfahrzeugs ermöglicht werden. Weiterhin ist es durch eine geeignete Gestaltung des Schrägenwinkels möglich, die Steifheit unterschiedlicher Werkstoffe zum Eingreifvorgang der Laschen vorteilhaft anzupassen.

In einer bevorzugten Ausgestaltung weisen die Federelemente eine Stirnseite und eine Rückseite auf, welche einen Hohlraum zur Aufnahme des Federwegs der Stirnseite bilden, wobei jeweils ein Ende der Rückseite mit jeweils einer Lasche und dem Grundkörper verbunden ist. So wird eine vorteilhaft einfache Realisierung des zweiten, elastischen Bereichs des Grundkörpers möglich, wodurch eine Bauteilreduzierung erreicht wird.

In einer weiteren bevorzugten Ausführungsform weist die Stirnseite des Federelements an ihrem freien Ende eine Verstärkungslasche zum gleichmäßigen Anliegen der Stirnseite des jeweiligen Federelements auf, wobei diese an der Innenseite des Bauteils des Kraftfahrzeugs in den Hohlraum gebogen ausgebildet ist. Dadurch liegt die Stirnseite des Federelements vorteilhaft gleichmäßig an dem Bauteil von innen an und kann so vorteilhaft die Einbauvorrichtung an unterschiedliche Einbausituationen anpassen.

Es ist bevorzugt, dass die Verstärkungslasche an ihrer Unterseite eine Schräge mit einem zweiten Schrägenwinkel aufweist, da dadurch einerseits das Anliegen an dem Bauteil vorteilhaft weiter verbessert wird und andererseits das Aufbringen des Grundkörpers auf den Konturring durch die Schräge der Verstärkungslasche vorteilhaft erleichtert wird.

Die Federelemente und Laschen sind in Bezug auf die Haltelaschen um 90° um die Längsachse des Grundkörpers verdreht angeordnet, woraus sich vorteilhaft kompakter Aufbau des Grundkörpers ergibt.

In einer Ausführungsform ist der Grundkörper mit dem ersten, starren Bereich und dem zweiten, elastischen Bereich aus einem gemeinsamen Kunststoffmaterial im Spritzgussverfahren hergestellt. Dieses ermöglicht eine vorteilhaft kostengünstige Gestaltung.

In einer anderen Ausführungsform ist der Grundkörper mit dem ersten, starren Bereich und mit dem zweiten, elastischen Bereich aus einem Zweikomponenten-Werkstoff im Spritzgussverfahren hergestellt. Hierbei ist eine vorteilhafte Gestaltung der unterschiedlichen Bereich auch in einem Spritzgusswerkzeug möglich.

Somit ergibt sich mit der erfindungsgemäßen Einbauvorrichtung vorteilhaft, dass die Bauteilevielfalt durch Integration von Bauelementen im Grundkörper reduziert ist und vorhanden Bauteile, wie zum Beispiel der Konturring, weiterhin benutzt werden können.

Die Halterung des Sensors sowie die Festlegung im Bauteil eines Kraftfahrzeugs wird von nur einem Teil übernommen. Alle Einbaugeometrien (verschiedene Stoßfängerdicken, Anstellwinkel usw.) können mit nur einem Teil realisiert werden. Ein definierter Sitz der Einbauvorrichtung in axialer Richtung ist gewährleistet, da die Feder mit dem Grundkörper in einer Position am Konturring die Festlegung ermöglicht. Durch geringere Bauteileanzahl verglichen mit dem Stand der Technik wird ein vorteilhaft geringerer Handlingsaufwand notwendig. Außerdem wird ein definierter Montageprozess ermöglicht.

Vorteilhafte Ausgestaltungen und Weiterbildungen der Erfindung sind den Unteransprüchen und der Beschreibung unter Bezugnahme auf die Zeichnungen entnehmbar.

### ZEICHNUNGEN

Die Erfindung wird nachfolgend anhand des in den Figuren der Zeichnung angegebenen Ausführungsbeispiels näher erläutert.

### Es zeigt dabei:

FIG. 1 eine Seitenansicht eines Grundkörpers einer erfindungsgemäßen Einbauvorrichtung;
FIG. 2 eine Ansicht in Richtung A des Grundkörpers der Einbauvorrichtung nach Fig. 1;
FIG. 3 eine Längsschnittansicht des Grundkörpers nach Fig. 1 um 90° gedreht;
FIG. 4 eine vergrößerte Schnittansicht der Einzelheit X aus Fig. 3;
FIG. 5 eine vergrößerte Schnittansicht der Einzelheit Y aus Fig. 3; und
FIG. 6 eine Seitenansicht in Schnittdarstellung eines Ausführungsbeispiels der erfindungsgemäßen Einbauvorrichtung.

### BESCHREIBUNG DES AUSFÜHRUNGSBEISPIELS

Abstandssensoren an Außenflächen von Kraftfahrzeugen sind zum Beispiel als bekannte Ultraschallsensoren ausgebildet. Diese Art von Sensoren ist bekannt und wird nicht weiter erläutert. Ihre Befestigung wird üblicherweise in den Stoßfängern vom und hinten am Fahrzeug vorgenommen, andere Anbringungsorte sind ebenfalls möglich.

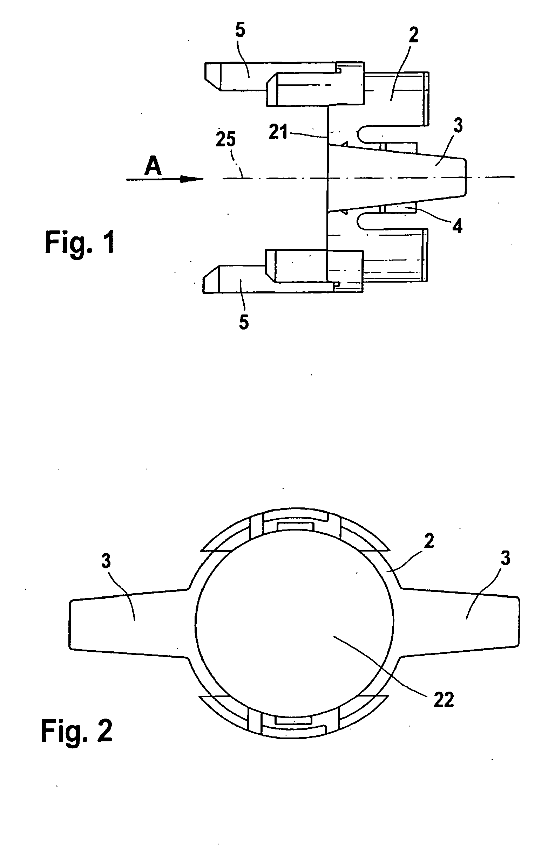

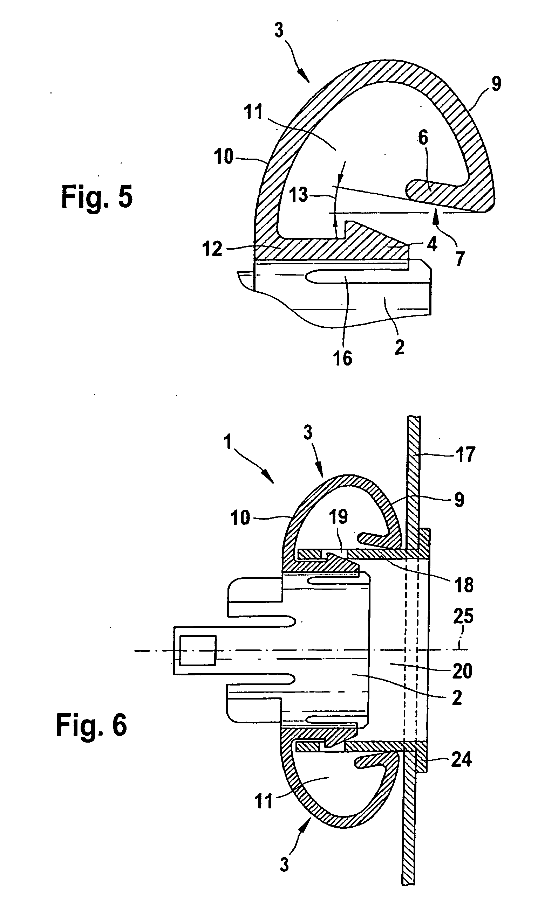

Diese Sensoren werden mittels einer Vorrichtung an dem jeweiligen Bauteil eines Kraftfahrzeugs befestigt. Figur 1 zeigt eine Seitenansicht eines Ausführungsbeispiels eines Grundkörpers 2 einer erfindungsgemäßen Einbauvorrichtung 1 (siehe Figur 6) für einen Sensor, der für den Einbau in einem Bauteil eines Kraftfahrzeugs vorgesehen ist.

Der Grundkörper 2 ist in dieser Ausgestaltung kreisförmig und besitzt einen ersten Bereich, der starr ausgebildet ist. Dieser erste Bereich weist eine innere kreisförmige Sensoraufnahme 22 (Figur 2) zwischen zwei an ihm angebrachten Haltelaschen 5 auf, welche an der Rückseite des Grundkörpers 2 in Verlängerung seiner Außenfläche zur Rückseite hin gegenüberliegend angeordnet sind. Der Sensor (nicht dargestellt) wird, wie aus der Figur 1 ersichtlich ist, von links nach rechts in den Grundkörper 2 entlang seiner Längsachse 25 in diesen im Wesentlichen starren Bereich eingebracht und mit den Haltelaschen in bekannter Weise arretiert. Hierbei bildet der Grundkörper 2 mit seiner Rückseite einen Anschlag 21 für einen Anschlagbund des Sensors.

Der erste starre Bereich des Grundkörpers 2 wird mit der Außenseite der Sensoraufnahme 22 (Figur 2) in einem Konturring 18 (siehe dazu Figur 6) aufgenommen. Zur Festlegung an dem Konturring 18 (Figur 6) an dem Bauteil des Kraftfahrzeugs weist der Grundkörper 2 in diesem Ausführungsbeispiel Laschen 4 auf, die sich gegenüberliegend auf der Außenfläche des Grundkörpers 2 angeordnet sind. Zusätzlich zu seinem starren Bereich besitzt der Grundkörper 2 einen elastischen Bereich mit zwei Federelementen 3, welche jeweils oberhalb der Laschen 4 angebracht sind.

Die Federelemente 3 weisen mit den Laschen 4 zur Vorderseite des Grundkörper 2 und sind in Bezug auf die rückseitigen Haltelaschen 5 zu diesen um 90° um die Längsachse 25 des Grundkörpers 2 gedreht angeordnet.

Figur 2 zeigt eine Ansicht des Grundkörpers 2 in Blickrichtung A gemäß Figur 1. Hierbei ist zu erkennen, dass sich die Federelemente 3 radial von der Mitte des Grundkörpers 2 nach außen erstrecken. Die Länge der radialen Ausdehnung der Federelemente 3 weist in diesem Beispiel ungefähr das Maß des Radius des Grundkörpers 2 auf.

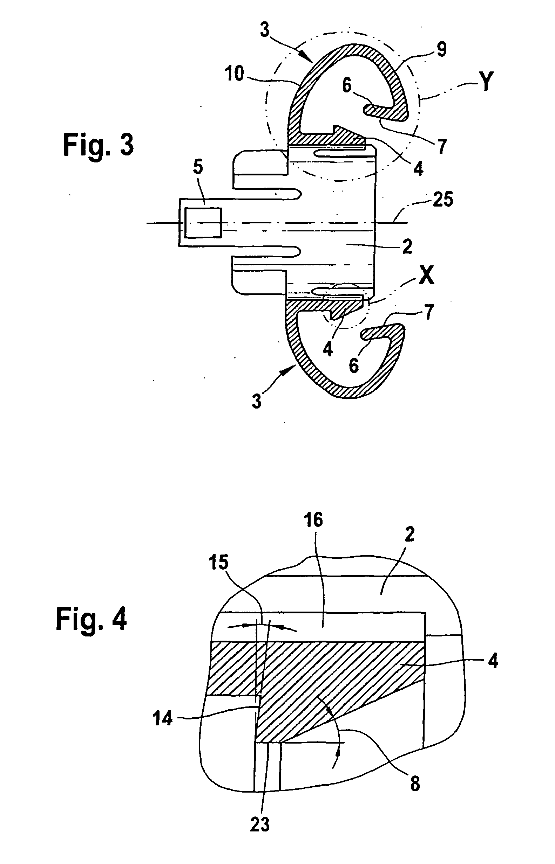

In Figur 3 ist eine Längsschnittansicht des Grundkörpers nach Figur 1 dargestellt, wobei der Grundkörper 2 um seine Längsachse 25 um 90° gedreht ist.

Das Federelement 3 weist eine Stirnseite 9 und eine Rückseite 10 auf, wobei das untere Ende der Stirnseite 9 nach hinten umgebogen ist und eine Verstärkungslasche 6 bildet. Die Form des Querschnitts des Federelements 3 ist in seinem oberen Abschnitt einem Ellipsenabschnitt ähnlich. Der untere Abschnitt der Rückseite 10 des Federelements 3 ist über einen Verbindungsabschnitt 12 mit der Lasche 4 und dem Grundkörper 2 verbunden, wie aus der vergrößerten Schnittansicht dieser Einzelheit Y in Figur 5 dargestellt ist und dabei noch näher beschrieben wird.

Die Lasche 4 verläuft parallel zur Längsachse 25 des Grundkörpers 2 und ist mit diesem über den Verbindungsabschnitt 12 und der Rückseite 10 des Federelements 3 verbunden. Zwischen der Lasche 4 und dem Grundkörper 2 erstreckt sich vom Verbindungsabschnitt 12 bis zum nach vorne weisenden Ende der Lasche 4 eine Ausnehmung 16, wie aus der vergrößerten Schnittansicht dieser Einzelheit X in Figur 4 gezeigt wird.

In Figur 4 ist das vorderseitige Ende der Lasche 4, welches dem Verbindungsabschnitt 12 gegenüberliegt, dargestellt und weist eine Schräge mit einem ersten Schrägenwinkel 8 auf, welcher in dieser Ausgestaltung ungefähr 25° beträgt. Die Dicke der Schräge nimmt nach hinten hin verlaufend zu, wobei sie in eine kurze Abflachung 23 übergeht, welche parallel zur Längsachse 25 des Grundkörpers 2 verläuft.

Die Abflachung 23 bildet mit ihrem rückseitigen Ende eine Kante, welche eine Hinterschneidung 14 mit einem Hinterschneidungswinkel 15 aufweist, hier in diesem Beispiel bevorzugt im Bereich von ungefähr 5° liegt.

Die Lasche 4 ist mit ihrem rückseitigen Ende im Verbindungsabschnitt 12 am Grundkörper 2 in einem bestimmten Maß federnd angebracht. Ihr Federweg wird zur Längsachse 25 des Grundkörpers 2 hin durch die Ausnehmung 16 ermöglicht

Die Rückseite 10 des Federelements 3 ist ebenfalls elastisch mit dem Verbindungsabschnitt 12 verbunden, wobei das Federelement 3, das in Figur 5 vergrößert dargestellt ist, federnd ausgebildet ist, und zwischen der Stirnseite 9 und der Rückseite 10 ein Hohlraum 11 angeordnet ist. Die Stirnseite 9 kann in diesen Hohlraum 11 einfedern. In dieser Ausgestaltung ist die Stirnseite 9 so angeordnet, dass sie sich in einem Abstand vor dem vorderen Ende des Grundkörpers 2 befindet. Mit diesem Abstand und dem Werkstoff dieses Federelements 3 lässt sich die Federwirkung bzw. der Federweg beeinflussen, so dass auch unterschiedlich starke Federraten möglich werden.

Die Verstärkungslasche 6 ist nach hinten in den Hohlraum 11 umgebogen, wobei sie mit einer Parallelen zur Längsachse 25 des Grundkörpers 2 einen zweiten Schrägenwinkel 13 mit einer Schräge 7 bildet. Die Verstärkungslasche 6 dient zum gleichmäßigen Auf- und Anliegen der Vorderseite 9 des Federelements 3 im eingebauten Zustand, welcher in der Figur 6 gezeigt ist. Die Schräge 7 hat eine weitere vorteilhafte Funktion zur Erleichterung des Einbaus des Grundkörpers 2 in bzw. über den Konturring 18.

In Figur 6 ist ein beispielhafter Einbauzustand der erfindungsgemäßen Einbauvorrichtung 1 in ein Bauteil eines Kraftfahrzeugs dargestellt. Dieses Bauteil ist hier zum Beispiel ein Stoßfänger 17, welcher eine Einbauöffnung 20 aufweist, in die von der in der Figur 6 rechts liegenden Außenseite ein Konturring 18 mit einem am Stoßfänger 17 außen anliegenden Bund 24 eingebracht ist.

Dieser Konturring 18 ist zum Beispiel zylinderförmig ausgebildet und weist in seinem rückwärtigen innen im Stoßfänger 17 liegenden Abschnitt Öffnungen 19 auf, welche in Form und Abmessung zu den Endabschnitten der Laschen 4 korrespondieren. Der Konturring 18 ist bekannt und besitzt einen Innendurchmesser, welcher zum Außendurchmesser des Grundkörpers 2 der Einbauvorrichtung 1 korrespondiert.

Bei der Montage wird von der Innenseite des Stoßfängers 17 her der Grundkörper 2 in den Konturring 18 eingeschoben, wobei die Laschen 4 zunächst in Richtung der Längsachse 25 des Grundkörpers 2 gedrückt werden, da deren Schrägen durch die Wandung des Konturrings 18 mit einer Kraft beaufschlagt wird. Der Grundkörper 2 wird nun weiter in Richtung seiner Längsachse 25 in den Konturring 18 eingeschoben, bis die Endabschnitte der Laschen 4 in die korrespondierenden Öffnungen 19 in der Wand des Konturrings 18 einrasten.
Gleichzeitig werden die Federelemente 3 durch Anliegen ihrer Stirnseiten 9 an der Innenseite des Stoßfängers 17 so zusammengedrückt, dass jeweils die Stirnseite 9 und die Verstärkungslasche 6 in Abhängigkeit von der Kontur der Innenseite des Stoßfängers 17 zur Rückseite 10 hin verschoben werden und entsprechend in den Hohlraum 11 verschoben werden.
Die Verstärkungslasche 6 ermöglicht, dass dieses Anliegen der jeweiligen Stirnseite 9 gleichmäßig erfolgt.
Durch das Zusammendrücken der Stirnseite 9 und der Rückseite 10 werden diese auf Grund ihrer Elastizität verformt und gespannt, wodurch eine Axialkraft in Längsrichtung der Längsachse 25 des Grundkörpers 2 erzeugt wird, die über die hinterschnittenen Kanten der in die Öffnungen 19 eingerasteten Endabschnitte der Laschen den Konturring 18 in Richtung seiner und der Längsachse 25 des Grundkörpers 2 in den Stoßfänger 17 hinein einwirkt. Dadurch bleibt der Konturring 18 und der von hinten aufgebrachte Grundkörper 2 in Bezug auf den Stoßfänger 17 kraftschlüssig befestigt. Ein Verdrehen kann durch bekannte Mittel wie Rastnase und dergleichen zwischen Konturring 18 und dem Stoßfänger 17 verhindert werden.

Der Konturring 18 kann unterschiedlich an die Außenkontur des Stoßfängers 17 angepasst sein. Dadurch ist es möglich, mit verschiedenen Konturringen 18 aber gleichen Grundkörpern 2 einen weiten Einsatzbereich abzudecken. Die Anpassung des Grundkörpers 2 an die Innenseite des jeweiligen Stoßfängers übemehmen die Federelemente 3, welche sich elastisch den verschiedenen Formen anpassen und immer die erforderlich axiale Haltekraft für die Einbauvorrichtung 1 erzeugen.

Ein Sensor wird nun nach der Montage der Einbauvorrichtung 1 in den Stoßfänger 17 des Kraftfahrzeugs von hinten in den Grundkörper 2 wie oben beschrieben eingebracht, so dass seine Vorderseite in bekannter Weise mit der Außenfläche des Stoßfängers 17 bzw. des Konturrings 18 abschließt. Dieses ist leicht vorstellbar, der Sensor ist nicht dargestellt.

Die relative Position des Sensors zum Stoßfänger 17 lässt sich vorteilhaft einfach durch eine entsprechende Gestaltung des Konturrings 18 ermöglichen.

Die Schrägen 7 der Verstärkungslaschen 6 erleichtern zusätzlich das Aufbringen des Grundkörpers 2 auf den Konturring 18.

Der Grundkörper 2, die Federelemente 3, die Laschen 4 und die Haltelaschen 5 sind in bevorzugter Ausführung einstückig als ein Spritzgussteil aus einem geeigneten Kunststoffmaterial hergestellt.

Die Erfindung ist nicht auf die oben beschriebenen Ausführungsbeispiele beschränkt, sondern auf vielfältige Art und Weise modifizierbar.

Es ist denkbar, dass die Laschen 4 als Einlegeteile aus Metall mit einer scharfen Kante ausgebildet sein können, welche am Konturring 18 eine feste Verbindung erwirken.

Ebenso kann der Konturring 18 über den Grundkörper 2 übergreifen und Nasen aufweisen, welche in den Grundkörper 2 eingreifen.

Weiterhin ist denkbar, dass der Konturring 18 bereits Bestandteil eines Bauteils des Kraftfahrzeugs ist.

Der Konturring 18 und der Grundkörper 2 können auch andere Querschnitte, zum Beispiel polygonale Querschnitte und dergleichen aufweisen. Ebenfalls können jeweils eine Vielzahl von Federelementen 3, Laschen 4 und Haltelaschen 5 am Grundkörper angeordnet sein.

Bei einer Ausführung des Grundkörpers 2 können die Federelemente 3 und/oder Laschen 4 auch aus einem Werkstoff bestehen, der eine unterschiedliche Federrate zum Werkstoff des Grundkörpers aufweist, in einer so genannten Zweikomponenten-Werkstoffausführung, das bedeutet, dass der erste, starre Bereich des Grundkörpers 2 aus einem starren Material hergestellt ist, wobei der zweite, elastische Bereich eine elastische Werkstoffkomponente aufweist, die an den Grundkörper 2 angespritzt ist.

## Patentansprüche

1. Einbauvorrichtung (1) für einen Sensor an einer Außenfläche eines Bauteils eines Kraftfahrzeugs, welche Folgendes aufweist:
- einen Grundkörper (2) zur Aufnahme des Sensors;
- Haltelaschen (5) zur Festlegung des Sensors am Grundkörper (2);
- einen Konturring (18) zur Aufnahme des Grundkörpers (2) und zum Befestigen des Grundkörpers (2) an dem Bauteil des Kraftfahrzeugs;
- Laschen (4) zur Festlegung des Grundkörpers (2) am Konturring (18); und
- Federelemente (3) zum kraftschlüssigen Halten des Grundkörpers (2) und Konturrings (18) am Bauteil des Kraftfahrzeugs,
wobei der Grundkörper (2) einen ersten, starren Bereich und einen zweiten, elastischen Bereich aufweist, und dass der Konturring (18) an einer Öffnung (20) des jeweiligen Bauteils vorgesehen ist,
**dadurch gekennzeichnet, dass** der erste, starre Bereich des Grundkörpers (2) mit einer Sensoraufnahme (22) und Haltelaschen (5) zur Aufnahme des Sensors und zum Einbringen und Festlegen im Konturring (18) mit den Laschen (4) ausgebildet ist, wobei der zweite, elastische Bereich die Federelemente (3) aufweist und mit dem ersten, starren Bereich über Verbindungsabschnitte (12) einstückig verbunden ausgebildet ist.

2. Einbauvorrichtung (1) nach Anspruch 1, **dadurch gekennzeichnet, dass**
**dadurch gekennzeichnet, dass** dass der Konturring (18) von außen in die Öffnung (20) des jeweiligen Bauteils eingebracht ist.

3. Einbauvorrichtung (1) nach einem der vorhergehenden Ansprüche **dadurch gekennzeichnet, dass** die Laschen (4) federnd gegenüber dem Grundkörper (2) ausgebildet sind, wobei für ihren Federweg zur Längsachse (25) des Grundkörpers (2) hin Ausnehmungen (16) unter ihnen im Grundkörper (2) eingebracht sind.

4. Einbauvorrichtung (1) nach einem der vorhergehenden Ansprüche, **dadurch gekennzeichnet, dass** die Laschen (4) an ihren dem mit dem Verbindungsabschnitt (12) verbundenen Ende gegenüberliegenden Ende Schrägen mit einem ersten Schrägenwinkel (8) und zu den Verbindungsabschnitt (12) weisenden Kanten mit jeweiligen Hinterschneidungen (14) aufweisen, wobei diese Kanten radial von der Längsachse (25) des Grundkörpers (2) weg weisen, wobei der Konturring (18) an einem Ende einen Bund (24) und zu den Endabschnitten der Laschen (4) korrespondierende Öffnungen (19) in seinem dem Bund gegenüberliegenden Abschnitt aufweist.

5. Einbauvorrichtung (1) nach einem der vorhergehenden Ansprüche, **dadurch gekennzeichnet, dass** die Federelemente (3) eine Stirnseite (9) und eine Rückseite (10) aufweisen, welche einen Hohlraum (11) zur Aufnahme des Federwegs der Stirnseite (9) bilden, wobei jeweils ein Ende der Rückseite (10) mit jeweils einer Lasche (4) und dem Grundkörper (2) verbunden ist.

6. Einbauvorrichtung (1) nach Anspruch 5, **dadurch gekennzeichnet,**
**dass** die Stirnseite (9) des Federelements (3) an ihrem freien Ende eine Verstärkungslasche (6) zum gleichmäßigen Anliegen der Stirnseite (9) des jeweiligen Federelements (3) aufweist, wobei diese an der Innenseite des Bauteils des Kraftfahrzeugs in den Hohlraum (11) gebogen ausgebildet ist.

7. Einbauvorrichtung (1) nach Anspruch 6, **dadurch gekennzeichnet,**
**dass** die Verstärkungslasche (6) an ihrer Unterseite eine Schräge (7) mit einem zweiten Schrägenwinkel (13) aufweist.

8. Einbauvorrichtung (1) nach einem der vorhergehenden Ansprüche, **dadurch gekennzeichnet, dass** die Federelemente (3) und Laschen (4) in Bezug auf die Haltelaschen (5) um 90° um die Längsachse (25) des Grundkörpers (2) verdreht angeordnet sind.

9. Einbauvorrichtung (1) nach einem der vorhergehenden Ansprüche **dadurch gekennzeichnet, dass** der Grundkörper (2) mit dem ersten, starren Bereich und dem zweiten, elastischen Bereich aus einem gemeinsamen Kunststoffmaterial im Spritzgussverfahren hergestellt ist.

10. Einbauvorrichtung (1) nach einem der Ansprüche 1-8, **dadurch gekennzeichnet, dass** der Grundkörper (2) mit dem ersten, starren Bereich und mit dem zweiten, elastischen Bereich aus einem Zweikomponenten-Werkstoff im Spritzgussverfahren hergestellt ist.

## Claims

1. Installation device (1) for a sensor on an outer surface of a component of a motor vehicle, said installation device having the following:
- a basic body (2) for receiving the sensor;
- holding tabs (5) for fixing the sensor to the basic body (2);
- a contour ring (18) for receiving the basic body (2) and for fastening the basic body (2) to the component of the motor vehicle;
- tabs (4) for fixing the basic body (2) to the contour ring (18); and
- spring elements (3) for the non-positive holding of the basic body (2) and contour ring (18) on the component of the motor vehicle,
wherein the basic body (2) has a first, rigid region and a second, elastic region, and wherein the contour ring (18) is provided on an opening (20) of the particular component,
**characterized in that** the first, rigid region of the basic body (2) is designed with a sensor receptacle (22) and holding tabs (5) for receiving the sensor and for placing and fixing the same in the contour ring (18) by means of the tabs (4), with the second, elastic region having the spring elements (3) and being designed such that it is connected as a single piece to the first, rigid region via connecting sections (12).

2. Installation device (1) according to Claim 1,
**characterized in that** the contour ring (18) is placed from the outside into the opening (20) of the particular component.

3. Installation device (1) according to one of the preceding claims, **characterized in that** the tabs (4) are designed such that they are resilient in relation to the basic body (2), with recesses (16) being placed under said tabs in the basic body (2) to enable the spring deflection of said tabs with respect to the longitudinal axis (25) of the basic body (2).

4. Installation device (1) according to one of the preceding claims, **characterized in that** the tabs (4) have slants with a first slant angle (8) at their end opposite the end connected to the connecting section (12) and have edges which face the connecting section (12) and have respective undercuts (14), said edges facing away radially from the longitudinal axis (25) of the basic body (2), and the contour ring (18) having a collar (24) at one end and openings (19), which correspond to the end sections of the tabs (4), in its section opposite the collar.

5. Installation device (1) according to one of the preceding claims, **characterized in that** the spring elements (3) have an end side (9) and a rear side (10), said sides forming a cavity (11) for absorbing the spring deflection of the end side (9), with one end of the rear side (10) being connected in each case to a tab (4) and to the basic body (2).

6. Installation device (1) according to Claim 5,
**characterized in that** the end side (9) of the spring element (3) has, at its free end, a reinforcing tab (6) for the uniform contact of the end side (9) of the respective spring element (3), said reinforcing tab being formed on the inner side of the motor vehicle component in a manner such that it curves into the cavity (11).

7. Installation device (1) according to Claim 6,
**characterized in that** the reinforcing tab (6) has, on its lower side, a slant (7) with a second slant angle (13).

8. Installation device (1) according to one of the preceding claims, **characterized in that** the spring elements (3) and tabs (4) are arranged with respect to the retaining tabs (5) in a manner rotated through 90° about the longitudinal axis (25) of the basic body (2).

9. Installation device (1) according to one of the preceding claims, **characterized in that** the basic body (2) with the first, rigid region and the second, elastic region is produced from a common plastics material by injection moulding.

10. Installation device (1) according to one of Claims 1-8, **characterized in that** the basic body (2) with the first, rigid region and with the second, elastic region is produced from a two-component material by injection moulding.

## Revendications

1. Dispositif de montage (1) pour un capteur sur une surface extérieure d'un composant d'un véhicule automobile, qui présente :
- un corps de base (2) pour recevoir le capteur ;
- des pattes de retenue (5) pour fixer le capteur sur le corps de base (2) ;
- une bague de contour (18) pour recevoir le corps de base (2) et pour fixer le corps de base (2) sur le composant du véhicule automobile ;
- des pattes (4) pour fixer le corps de base (2) sur la bague de contour (18) ; et
- des éléments de ressort (3) pour maintenir par engagement par friction le corps de base (2) et la bague de contour (18) sur le composant du véhicule automobile,
le corps de base (2) présentant une première région rigide et une deuxième région élastique, et la bague de contour (18) étant prévue sur une ouverture (20) du composant respectif,
**caractérisé en ce que**
la première région rigide du corps de base (2) est réalisée avec un logement de capteur (22) et des pattes de retenue (5) pour recevoir le capteur et pour le monter et le fixer dans la bague de contour (18) avec les pattes (4), la deuxième région élastique présentant les éléments de ressort (3) et étant réalisée d'une seule pièce avec la première région rigide par une connexion par le biais de portions de connexion (12).

2. Dispositif de montage (1) selon la revendication 1, **caractérisé en ce que** la bague de contour (18) est montée depuis l'extérieur dans l'ouverture (20) du composant respectif.

3. Dispositif de montage (1) selon l'une quelconque des revendications précédentes, **caractérisé en ce que** les pattes (4) sont réalisées avec un effet de ressort par rapport au corps de base (2), des évidements (16) étant pratiqués sous celles-ci dans le corps de base (2) pour leur course de ressort vers l'axe longitudinal (25) du corps de base (2).

4. Dispositif de montage (1) selon l'une quelconque des revendications précédentes, **caractérisé en ce que** les pattes (4) présentent à leur extrémité opposée à l'extrémité connectée à la portion de connexion (12) des biseaux avec un premier angle de biseautage (8) et des arêtes tournées vers la portion de connexion (12) avec des contre-dépouilles respectives (14), ces arêtes étant tournées radialement à l'écart de l'axe longitudinal (25) du corps de base (2), la bague de contour (18) présentant à une extrémité un épaulement (24) et des ouvertures correspondantes (19) vers les portions d'extrémité des pattes (4) dans sa portion opposée à l'épaulement.

5. Dispositif de montage (1) selon l'une quelconque des revendications précédentes, **caractérisé en ce que** les éléments de ressort (3) présentent un côté frontal (9) et un côté arrière (10), qui forment une cavité (11) pour recevoir la course de ressort du côté frontal (9), une extrémité du côté arrière (10) étant à chaque fois connectée à une patte (4) et au corps de base (2).

6. Dispositif de montage (1) selon la revendication 5, **caractérisé en ce que** le côté frontal (9) de l'élément de ressort (3) présente à son extrémité libre une patte de renforcement (6) pour l'application uniforme du côté frontal (9) de l'élément de ressort respectif (3), celle-ci étant réalisée sous forme cintrée du côté interne du composant du véhicule automobile dans la cavité (11).

7. Dispositif de montage (1) selon la revendication 6, **caractérisé en ce que** la patte de renforcement (6) présente sur son côté inférieur un biseau (7) avec un deuxième angle de biseautage (13).

8. Dispositif de montage (1) selon l'une quelconque des revendications précédentes, **caractérisé en ce que** les éléments de ressort (3) et les pattes (4) sont disposés par rapport aux pattes de retenue (5) de manière tournée de 90° autour de l'axe longitudinal (25) du corps de base (2).

9. Dispositif de montage (1) selon l'une quelconque des revendications précédentes, **caractérisé en ce que** le corps de base (2) est fabriqué avec la première région rigide et la deuxième région élastique en un matériau en plastique commun par un procédé de moulage par injection.

10. Dispositif de montage (1) selon l'une quelconque des revendications 1 à 8, **caractérisé en ce que** le corps de base (2) avec la première région rigide et avec la deuxième région élastique est fabriqué en un matériau à deux composants dans un procédé de moulage par injection.
